# EUROPEAN PATENT SPECIFICATION

(11) **EP 3 537 028 B1**
(45) Date of publication and mention of the grant of the patent: **19.05.2021**
(21) Application number: 17875294.5
(22) Date of filing: 13.11.2017
(51) Int. Cl.: F21K 9/60, F21V 33/00, A01G 7/04, H05B 33/08, F21Y 115/10, F21W 131/109, F21V 9/45, F21V 14/08, F21V 14/02, F21V 23/00

(54) **LIGHT EMITTING DEVICE FOR PLANT GROWTH WITH VARIABLE WAVELENGTHS USING QUANTUM DOTS**
LICHTEMITTIERENDE VORRICHTUNG FÜR PFLANZENWACHSTUM MIT VARIABLEN WELLENLÄNGEN MIT QUANTENPUNKTEN
DISPOSITIF ÉLECTROLUMINESCENT AYANT DES LONGUEURS D'ONDE VARIABLES UTILISANT DES POINTS QUANTIQUES POUR LA CROISSANCE DE PLANTES

(30) Priority: 30.11.2016 KR 20160161290
(43) Date of publication of application: 11.09.2019
(73) Proprietor: Sherpa Space Inc., Daejeon 34051 (KR)
(72) Inventor: YUN, Choamun, Daejeon 34033 (KR)
(74) Representative: Schmitt-Nilson Schraud Waibel Wohlfrom Patentanwälte Partnerschaft mbB
(86) International application number: PCT/KR2017/012778
(87) International publication number: WO 2018/101643

(56) References cited:
- KR-A- 20100 124 808
- KR-A- 20120 120 996
- KR-A- 20140 036 799
- KR-A- 20140 036 799
- TW-A- 201 416 610
- US-A1- 2013 047 503
- US-A1- 2014 339 983
- US-A1- 2014 339 983
- US-A1- 2015 128 488
- US-A1- 2015 192 272
- US-A1- 2016 000 018
- US-A1- 2016 040 833
- US-A1- 2016 040 833

## Description

### [Technical Field]

The present invention relates to a light emitting device that is intended for plant growth and provides variable wavelengths using quantum dots. More particularly, the present invention relates to a light emitting device for growing plants with variable wavelengths provided using quantum dots, where the device can optimize the growth of plants by way of a light emitting source having a variable wavelength and improve the quality of the plants.

### [Background Art]

Plants serve an important role of providing nutrients and supplying oxygen to the ecosystem as chloroplasts of the plants perform carbon assimilation, which refers to the synthesis of carbohydrates from carbon gases and water by means of sunlight. To increase the efficiency of this process by which plants convert light energy into chemical energy, which process is known as photosynthesis, as well as the functions of the chlorophylls, there is required a light source for emitting irradiation of a particular wave band that can serve as a substitute for sunlight.

Fluorescent lamps or high-pressure sodium lamps have been used to promote plant growth in plastic or vinyl greenhouses. With fluorescent lamps or high-pressure sodium lamps, however, there is the drawback that it is not possible to provide high-intensity irradiation of only the wavelengths promoting plant growth, as these lamps also include large amounts of irradiation in wavelengths that are irrelevant to plant photosynthesis.

Also, whereas the incandescent, fluorescent, halogen-bulb, and high-pressure sodium lamps have been used in the past as lighting devices for growing plants, the energy-efficient and eco-friendly semiconductor light-emitting diode (hereinafter "LED") has been developed as a replacement.

To provide irradiation using the above plant growth LED in an optimum wavelength and brightness that can be adjusted according to the growth properties of the plants, Korean Registered Patent No. 10-0883691 discloses a technique of arranging various types of LEDs on a board in suitable proportions, and Korean Patent Publication No. 10-2004-0010426 discloses a system that uses LED lamps of 730 nm of far infrared light, 660 nm of red light, and 450 nm of blue light as light sources.

Since the technologies described above were developed for control systems, they can be difficult to use in general farm households and may not provide levels of productivity comparable to the costs of investment.

The problems above arise due to the fact that, although the LED lamp is being utilized in various ways, the LED lamp is typically manufactured with one type of light-emitting substance, the LED lamp is incapable of emitting irradiation of various wavelengths in a manner similar to natural light, and inorganic fluorescent bodies provide low efficiency in light emission and low color rendering indexes and thus cannot easily simulate natural light.

Korean Patent Publication No. 10-2013-0052306 discloses a plant lighting device in which one or more first LEDs and second LEDs are mounted in an integrated form on a module, where the first LEDs and the second LEDs are arranged to intersect one another, with the first LEDs and the second LEDs providing a chlorophyll activation wavelength 440∼655 nm and a photosynthesis activation wavelength 430∼670 nm. However, as the plant lighting device still provides light of limited and fixed wavelengths, it is limited in terms of providing irradiation of varying wavelengths.

Korean Registered Patent No. 10-1185618 discloses an LED for plant growth which uses a mixed arrangement of quantum dots that have different diameters from among one to five types, where light emitted from the LED passes through a filler layer containing quantum dots to be converted into wavelengths that increase the efficiency of the photosynthesis and chlorophyll actions necessary for plant cultivation.

Here, quantum dots refer to particles in which hundreds to thousands of specific atoms have gathered together, where the particles form semiconductor crystals with the quanta synthesized to a nanometer (nm) scale. When irradiated with ultraviolet rays, quantum dots may display different colors depending on the sizes of the particles, even if the particles are composed of the same components.

However, the LED for plant growth using quantum dots merely provide light of a fixed or limited range of wavelengths and cannot provide irradiation having the required wavelengths according to the growth of the plants.

US 2015/192272 A1 discloses a system for producing color transformable light which includes a light source designed to emit blue excitation light and a color transformer adapted to selectively absorb and reemit the blue excitation light as green light and/or red light. The color transformer includes a transparent slide that includes a first region embedded with red phosphor, a second region embedded with green phosphor and a third region in the absence of phosphors.

TW 201 416 610 A discloses a light emitting device which can be modulated to emit wavelength. The light emitting device is provided with a control unit connected to a light source and a wavelength-tunable power source. A wavelength modulation unit is equipped at the output end of the wavelength-tunable power source corresponding to the light source. The wavelength modulation unit can be driven by the wavelength-tunable power source and is provided with a plurality of light transmission intervals with different wavelengths so that light emitted form the light source can have different wavelengths therethrough. Document US 2016/0000018 A1 discloses a light emitting device according to the preamble of claim 5. Document US 2016/0040833 A1 also represents prior art relevant to the present invention.

### [Disclosure]

### [Technical Problem]

The present invention has been conceived to resolve the problems above, and one objective of the present invention is to provide a light emitting device for growing plants by providing variable wavelengths using quantum dots. The device can optimize the growth of plants and improve the quality of plants with a light emitting source having variable wavelengths by irradiating light through a sheet in which multiple quantum dots are arranged so that the wavelength may be adjusted to the required value according to the type and growth phase of the plants.

The objectives of the embodiments of the present invention are not limited to the objective described above. Other objectives that have not been mentioned would be clearly apparent from the disclosure below to the person having ordinary skill in the field of art to which the present invention pertains.

### [Technical Solution]

The present invention relates to a light emitting device and a wavelength changing unit according to the appended claims.

An embodiment of the present invention, conceived to achieve the objectives above, provides a light emitting device for growing plants that is capable of emitting light with varying wavelengths by combining multiple wavelengths using quantum dots, where the device includes: a light emitting unit 310 comprising at least one light source; a wavelength changing unit 320 spaced apart from the light source by a predetermined distance and comprising a plurality of separated regions, each of which include quantum dots emit light of a predetermined wavelength in correspondence to each of, each column of, or each row of light sources; a driving unit 330 configured to change the region of the wavelength changing unit that is illuminated by the light source; and a control unit 340 that controls the operation of the driving unit to adjust the outputted wavelength.

Another embodiment of the present invention provides a light emitting device for growing plants that is capable of emitting light with varying wavelengths by combining multiple wavelengths using quantum dots, where the device includes: a light emitting unit 710 comprising at least one light source; a wavelength changing unit 720 spaced apart from the light source by a predetermined distance and comprising a region having quantum dots corresponding to a predetermined wavelength, with the region corresponding to each of, each column of, or each row of the at least one light source; and a control unit 740 for controlling the light emitting unit to adjust the wavelength of light outputted through the wavelength changing unit.

### [Advantageous Effects]

A light emitting diode for growing plants according to an embodiment of the present invention can adjust the wavelength of irradiation, by having the light emitting unit irradiate light through a sheet in which multiple quantum dots are arranged, so that light having the wavelengths required for different growth phases of the plants and the wavelengths required for optimum growth for different plant species may be provided. Also, with a light emitting diode for growing plants according to an embodiment of the present invention, by providing the light in wavelengths needed for each growth phase of the plants and in wavelengths needed for optimum growth according to the species of the plants, it is possible to optimize the growth of the plants and improve the quality of the plants.

### [Description of Drawings]

Fig. 1 and Fig. 2 are diagrams for explaining quantum dots used in the present invention.
Fig. 3 is a diagram illustrating a light emitting device for growing plants having variable wavelengths using quantum dots according to an embodiment of the present invention.
Fig. 4a is a diagram illustrating a first example implementation of a light emitting device for growing plants having variable wavelengths using quantum dots according to an embodiment of the present invention.
Fig. 4b is a detailed view of the wavelength changing unit 421 shown in Fig. 4a.
Fig. 5 is a diagram illustrating a second example implementation of a light emitting device for growing plants having variable wavelengths using quantum dots according to an embodiment of the present invention.
Fig. 6 is a diagram illustrating a third example implementation of a light emitting device for growing plants having variable wavelengths using quantum dots according to an embodiment of the present invention.
Fig. 7 is a diagram illustrating a light emitting device for growing plants having variable wavelengths using quantum dots according to another embodiment of the present invention.
Fig. 8 is a diagram illustrating a first example implementation of a light emitting device for growing plants having a variable wavelength using quantum dots according to another embodiment of the present invention.
Fig. 9 is a diagram illustrating a second example implementation of a light emitting device for growing plants having a variable wavelength using quantum dots according to another embodiment of the present invention.

### [Best Mode]

As the present invention allows for various modifications and alternative forms, specific embodiment of the invention are illustrated as examples in the drawings and in the detailed descriptions below. It should be understood, however, that the present invention is not intended to be limited to the specific embodiments.

When an element is referred to as being "connected" or "coupled" to another element, it is to be understood that the element may be directly connected or coupled to the other element, but also that one or more other components may be present therebetween.

In contrast, when an element is referred to as being "directly connected" or "directly coupled" to another element, it is to be understood that there are no other elements present therebetween.

The terminology used herein is used for the purpose of describing a particular embodiment only and is not intended to limit the present invention. The singular expression encompasses the meaning of plural expressions unless the context clearly describes otherwise. In the present application, it is to be understood that terms such as "include", "have" or the like are intended to specify the existence of the feature, number, process, operation, element, component or combination thereof described in the specification and do not preclude the existence or possible addition of one or more other features, numbers, processes, operations, elements, components, or combinations thereof.

Unless defined otherwise, all terms used herein, including technological or scientific terms, have the same meaning as those commonly understood by the person having ordinary skill in the field of art to which the present invention pertains. Terms such as those defined in a commonly used dictionary are to be construed as having a meaning consistent with the meaning in the context of the relevant art and are not to be construed as ideal or overly formal in meaning unless explicitly defined in the present application.

Hereinafter, the present invention will be described in more detail with reference to the accompanying drawings. Prior to this, terms and words used in the present specification and claims should not be construed as limited to ordinary or dictionary meanings and should be construed in light of the meanings and concepts consistent with the technical idea of the present invention, based on the principle that the inventor can suitably define a concept of a term in order to describe the invention in the best possible way. In addition, unless otherwise defined, the technical terms and scientific terms used herein have the meanings as commonly understood by the person having ordinary skill in the field of art to which the present invention pertains, and descriptions of known functions and configurations that may unnecessarily obscure the essence of the present invention will be omitted in the following description and the accompanying drawings. The drawings that follow are provided as examples such that those skilled in the art can sufficiently understand the spirit of the present invention. Therefore, the present invention is not limited to the drawings provided below and may be embodied in other forms. In addition, the same reference numerals designate the same elements throughout the specification. It is to be noted that the same elements in the drawings are denoted by the same reference numerals wherever possible.

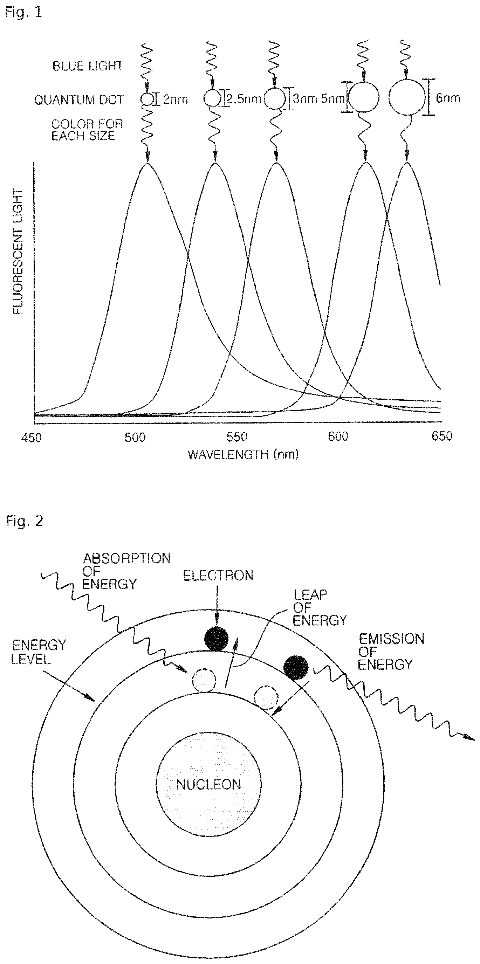

Fig. 1 and Fig. 2 are diagrams illustrating quantum dots used in the present invention.

A quantum dot is a semiconductor crystal in which quanta have been synthesized to a nanometer (nm) scale. When ultraviolet rays (blue light) are applied, the quantum dots exhibit various colors depending on the sizes of the particles even when the particles are of the same component, and such a property is better exhibited in semiconductor materials than in regular materials. Elements such as cadmium, cadmium sulfide, cadmium selenide, and indium phosphide, which have a strong tendency to exhibit the above-mentioned property, are utilized in quantum dot semiconductor crystals. A recent implementation includes a zinc-selenium-sulfur alloy (ZnSeS) enveloped around an indium phosphide core to avoid the use of the heavy metal cadmium.

As illustrated in Fig. 1, if the quantum dot is small, the quantum dot emits a visible light having a short wavelength such as green, and as the size increases, the quantum dot emits the visible light having a longer wavelength such as red. In general, the bandgap energy is controlled according to the size of the quantum dot, owing to the quantum confinement effect, and thereby, energy of various wavelengths is emitted. That is, the quantum dot emits light as the energy level of the electrons is lowered within the quantum dot, and the larger the quantum dot is, the narrower the gap between energy levels is, whereby a red color corresponding to a longer wavelength and a relatively low energy is emitted. (Source of Fig. 1: http://informationdisplay.org)

Referring to Fig. 2, a principle of the quantum dot is that, in a material with clusters of quanta, particularly in semiconductor material, an application of energy from ultraviolet rays or the like causes the electrons within the material to move to a higher energy level by way of a quantum jump and then emit energy to go back down to a lower energy level, the above process being repeated continuously. Here, energy of various wavelengths is emitted depending on the size of the quantum dot. If the wavelength (energy) is within the visible region (380 nm to 800 nm), then various colors visible to the eye are emitted as wavelengths of energy forms.

That is, if the quantum dot absorbs light from an excitation source and reaches an energy-excited state, the quantum dot emits energy corresponding to an energy band gap of the quantum dot. Therefore, by controlling the size or material composition of the quantum dot, it is possible to control the energy band gap, and thereby, light can be emitted in any of the regions from the ultraviolet region to the infrared region.

The quantum dot may be produced by a vapor deposition method such as a metal organic chemical vapor deposition (MOCVD) method or a molecular beam epitaxy (MBE) method, or may be produced by a chemical wet synthesis method. Since the quantum dots produced by the chemical wet synthesis method are dispersed in a solvent in a colloidal state, the quantum dots are separated from the solvent through centrifugation, and the separated quantum dots can be dispersed in a prepared metal-organic precursor solution. Here, the quantum dots can be stabilized by bonding with an organic matter of the metal-organic precursor.

Table 1 below shows the effect of light wavelength on plants. As shown in Table 1, plants generally receive the energy required for plant growth in the blue wavelength region or the red wavelength region. For plant growth, photosynthesis and chlorophyll activation, for example, are of great importance. Photosynthetic activity is maximized at wavelengths near 430 nm and near 670 nm. Chlorophyll activation can be maximized at wavelengths around 440 nm and around 655 nm.

**[Table 1]**

| Wavelength (nm) | | | Effect |
|---|---|---|---|
| Infrared Ray | IR-A | 1400 ∼ 1000 | no special effect on plants, applies thermal effect |
| | | 780 | promotes specific growth effects on plants |
| Visible Ray | red | 700 | prevents germination (730), maximizes photosynthesis (670) |
| | | 660 | maximizes chlorophyll action (655), promotes germination and forming of leaves, germinal vesicles, and flower buds (660) |
| | reddish yellow | 610 | not beneficial to photosynthesis, controls harmful insects (580-650) |
| | greenish yellow | 510 | partially absorbed by yellow pigment |
| | blue | 430∼440 | maximizes photosynthesis (430) maximizes chlorophyll action (440) attracts harmful insects |
| UV-Ray | UV-A | 400∼315 | generally thickens leaves of plants, promotes color development of pigments, attracts harmful insects |
| | UV-B | 280 | has important functions in many synthesis processes (forms immune bodies), is harmful if too strong |
| | UV-C | 100 | causes plants to rapidly wither |

### (Table 1 source: http://www.parus.co.kr/main.php?mm=s13)

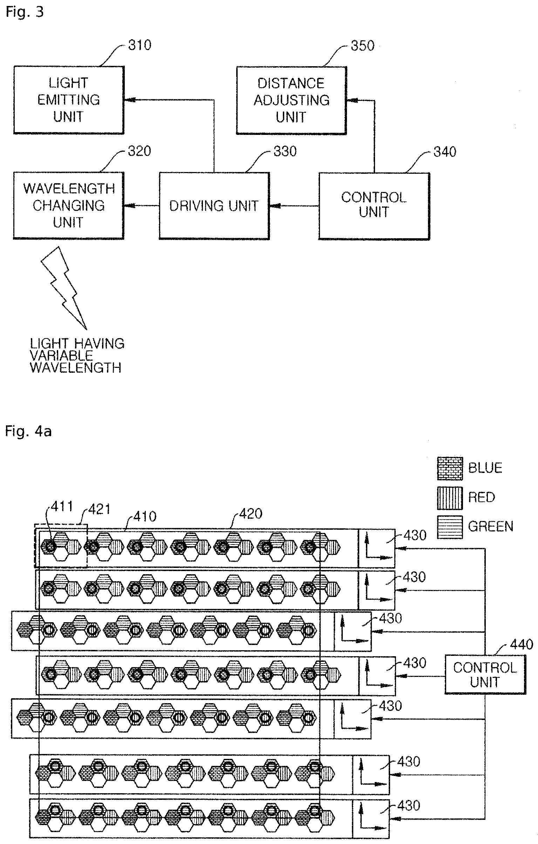

Fig. 3 is a diagram illustrating a light emitting device for growing plants having variable wavelengths using quantum dots according to an embodiment of the present invention.

As illustrated in Fig. 3, the plant growth light emitting device for providing variable wavelengths using quantum dots comprises a light emitting unit 310, a wavelength changing unit 320, a driving unit 330, and a control unit 340.

The light emitting unit 310 comprises at least one light source, and, for example, a plurality of light sources may be arranged in a matrix form. The light source comprises an LED emitting white or blue light.

The wavelength changing unit 320 is spaced apart from the light emitting unit 310 by a predetermined distance and comprises quantum dots that emit light corresponding to a predetermined wavelength in each of a plurality of separated regions of the wavelength changing unit 320, which in turn correspond to each of the light sources or correspond to each column or each row of the light sources.

The driving unit 330 is configured to adjust a position of the light source or the wavelength changing unit 320 so as to change a region of the wavelength changing unit 320 irradiated by the light source, and one or more driving units can be provided.

The control unit 340 controls an operation of the driving unit 330 to adjust a wavelength outputted from the plant growth light emitting device for providing variable wavelengths using quantum dots.

Specifically, the control unit 340 is configured to change the position of the wavelength changing unit 320 or the light emitting unit 310 in consideration of information regarding the wavelengths and mixed proportion of wavelengths that vary according to the growth phase of the plants and information regarding the wavelengths outputted as a result of the position control of the wavelength changing unit 320 or light emitting unit 310, thus adjusting the wavelengths outputted from the light emitting device.

That is, the plant growth light emitting device for providing variable wavelengths using quantum dots emits light having wavelengths that may be varied by a combination of multiple wavelengths.

The plant growth light emitting device for providing variable wavelengths using quantum dots may further comprise a distance adjusting unit 350. The distance adjusting unit 350 adjusts the distance between the light emitting unit 310 and the wavelength changing unit 320 according to the control of the control unit 340.

Table 2 below shows the combination of wavelengths needed for each phase of plant growth.

As shown in Table 2, the required wavelengths vary depending on the growth phases of the plants as well as the plant species. The mixed proportions a to v in Table 2 can be set to arbitrary proportions depending on the growth phases of the plant and the plant species. As such, the present invention provides a light emitting device that outputs light with variable wavelengths in accordance with the growth phases.

**[Table 2]**

| | Growth Phase | Effect | Mode | Effective Wavelength | Mixed Proportions |
|---|---|---|---|---|---|
| 1 | Blossoming (Germination) | Induce Germination | A | red, blue, far-red | a:b:c |
| 2 | Vegetative Growth | Growth Control (Cell Division and Growth) | B | red, blue, far-red | d:e:f |
| | | | C | blue | g |
| | | Shape Forming | D | red, blue, far-red | h:i:j |
| | | | E | blue | h |
| | | Phototropism | F | blue | 1 |
| | | Open Pores | G | blue | m |
| | | Chloroplast Action | H | blue | n |
| 3 | Reproductive Growth | Flower Bud Formation | I | red, blue, far-red | o:p:q |
| | | | | blue | r |
| 4 | Aging | Pigment Synthesis / Creation | J | red, blue, far-red | s:t:u |
| | | | | blue | v |

| | | | | | |
|---|---|---|---|---|---|
| (Source: Gyeongsangbuk-do Agricultural Research and Extension Services (Publication No. 75-6470332-000114-01) Technology Manual for Cultivating Lettuce, Ice Plant, and Watercress using an LED Plant Factory) | | | | | |

Below, example implementations of a plant growth light emitting device for providing variable wavelengths using quantum dots according to an embodiment of the present invention will be described with reference to Figs. 4a, 4b, 5, and 6.

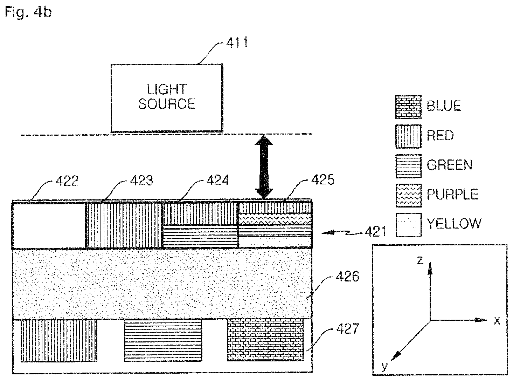

Fig. 4a is a diagram illustrating a first example implementation of a light emitting device for growing plants by providing variable wavelengths using quantum dots according to an embodiment of the present invention, and Fig. 4b is a detailed view of the wavelength changing unit 421 shown in Fig. 4a.

As illustrated in Fig. 4b, the wavelength changing unit 421 comprises a first region 422 which allows the wavelength of the light source 411 to be outputted as it is, a second region 423 including quantum dots for emitting a red color, a third region 424 in which quantum dots for emitting a red color and quantum dots for emitting a green color are stacked, and a fourth region 425 in which quantum dots for emitting a red color, quantum dots for emitting a violet color, quantum dots for emitting a green color, and quantum dots for emitting a yellow color are stacked.

Although the figure illustrates only the region including quantum dots for emitting a red color, regions including quantum dots for emitting a green color and a blue color (not illustrated) can also be included.

The wavelength changing unit 421 may comprise a region including quantum dots (not illustrated) in which two or more types of quantum dots for red, green, and blue colors are mixed together to emit a new arbitrary color (for example, yellow, violet, or the like).

In the fourth region 425 in which a plurality of layers formed with the quantum dots are stacked together, the quantum dots that absorb and emit longer wavelengths may be stacked closer to the light source 411, or the quantum dots that absorb and emit longer wavelengths may be stacked further away from the light source 411.

The wavelength changing unit 421 may further comprise an optical film 426 for protecting the plurality of separated regions 422 to 425 and a color filter 427 for increasing the color purity of light passing through the plurality of separated regions 422 to 425.

The driving unit 430 may adjust the position of the wavelength changing unit 420 or the light emitting unit 410 in the x and y directions such that a region of the wavelength changing unit 420 irradiated by the light source is changed, and a distance adjusting unit (not illustrated) for adjusting the distance between the light source 411 and the wavelength changing unit 421 may adjust the position in the z direction.

As illustrated in Fig. 4a, the first embodiment of the plant growth light emitting device for providing variable wavelengths using quantum dots comprises a light emitting unit 410, a wavelength changing unit 420, a driving unit 430, and a control unit 440.

The light emitting unit 410 comprises at least one light source 411, and as an example, a plurality of light sources are arranged in the form of a 7x7 matrix.

The wavelength changing unit 420 is spaced apart from the light emitting unit 410 by a predetermined distance and is illustrated as four hexagons corresponding to each light source 411, and each hexagonal region comprises quantum dots for emitting light corresponding to a predetermined wavelength.

The driving unit 430 is configured to adjust a position of the wavelength changing unit 420 in the x and y directions on a row-by-row basis such that a region of the wavelength changing unit 420 irradiated by the light source is changed, and one or more driving units may be provided.

The control unit 440 is configured to control the operation of each of the one or more driving units 430 to adjust the wavelength outputted from the plant growth light emitting device for providing variable wavelengths using quantum dots.

While Fig. 4a illustrates an example where the driving unit 430 controls the wavelength changing unit 420 on a row-by-row basis to change the irradiated region, it is possible to control the wavelength changing unit 420 on a column-by-column basis, and it is also possible to control the position of the light emitting unit 410 on a row-by-row basis or column-by-column basis to change the irradiated region.

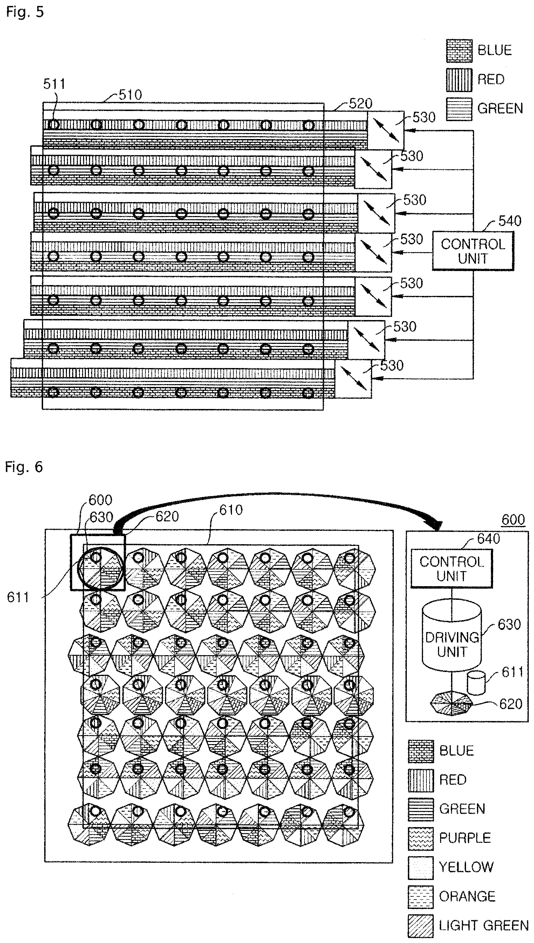

Fig. 5 is a diagram illustrating a second embodiment of a light emitting device for growing plants having variable wavelengths using quantum dots according to an embodiment of the present invention.

As illustrated in Fig. 5, the second embodiment of the plant growth light emitting device for providing variable wavelengths using quantum dots comprises a light emitting unit 510, a wavelength changing unit 520, a driving unit 530 and a control unit 540.

The light emitting unit 510 comprises at least one light source 511, and for example, a plurality of light sources are arranged in the form of a 7x7 matrix.

The wavelength changing unit 520 is spaced apart from the light emitting unit 510 by a predetermined distance and is illustrated in a four-line form corresponding respectively to each row of the light source 511, with each region of line comprising quantum dots for emitting light corresponding to a predetermined wavelength.

The driving unit 530 is configured to control a position of the wavelength changing unit 520 in a diagonal direction on a row-by-row basis to change the region of the wavelength changing unit 520 irradiated by the light emitting unit 510, and one or more the driving units may be provided.

The control unit 540 controls the operation of each of the one or more driving units 530 to adjust the wavelengths outputted from the plant growth light emitting device for providing variable wavelengths using quantum dots.

While Fig. 5 illustrates the driving unit 530 as controlling the wavelength changing unit 520 on a row-by-row basis to change the irradiation regions, it is also possible to control the position of the wavelength changing unit 520 on a column-by-column basis, and it is also possible for the driving unit 530 to control the position of the light emitting unit 510 on a row-by-row basis or a column-by-column basis to change the irradiated regions.

Fig. 6 is a diagram illustrating a third embodiment of a light emitting device for growing plants having variable wavelengths using quantum dots according to an embodiment of the present invention.

As illustrated in Fig. 6, the third embodiment of a light emitting device for growing plants having variable wavelengths using quantum dots comprises a light emitting unit 610, a wavelength changing unit 620, a driving unit 630 and a control unit 640.

The light emitting unit 610 comprises at least one light source 611. As an example, a plurality of light sources may be arranged in the form of a 7x7 matrix.

The wavelength changing unit 620 is spaced apart from the light emitting unit 610 by a predetermined distance and is illustrated as an octagon divided into eight regions corresponding to the light sources 611 respectively, with each region having quantum dots that emit light corresponding to a predetermined wavelength. Here, the shape of each light source 611 may be circular.

That is, each wavelength changing unit 620 corresponding to a respective light source 611 has eight triangular shapes arranged about a central point, and each region includes quantum dots for emitting light corresponding to the predetermined wavelength.

The driving unit 630 is configured to rotate the wavelength changing unit 620 to change the region of the wavelength changing unit 620 irradiated by the light source 611, and the driving units 620 are provided in the same number as the wavelength changing units 620.

The control unit 640 controls the operation of each of the driving units 630 to adjust the wavelengths outputted from the plant growth light emitting device for providing variable wavelengths using quantum dots.

While Fig. 6 illustrates an example where the driving unit 630 changes the irradiation region by rotating the wavelength changing unit 620, it is also possible for the driving unit 630 to control the position of the light source 611 to change the irradiation region.

For example, the driving unit 630 may be configured to rotate through the attraction and repulsion obtained using an electromagnet, of which the polarity may be changed according to the flow of current, and can be designed such that the wavelength changing unit 620 or the light source 611 can be rotationally moved by way of the rotating driving unit 630.

A method of changing the irradiation region by rotating the wavelength changing unit 620 by means of the driving unit 630 rotating under the control of the control unit 640 may be understood by referring to the configuration diagram of a portion 600 of the plant growth light emitting device for providing variable wavelengths using quantum dots.

The rotating driving unit 630 may be designed to move the rotated member in the z-axis direction. Therefore, the rotating driving unit 630 may also be used as a distance adjusting unit for adjusting the distance between the light source 611 and the wavelength changing unit 620.

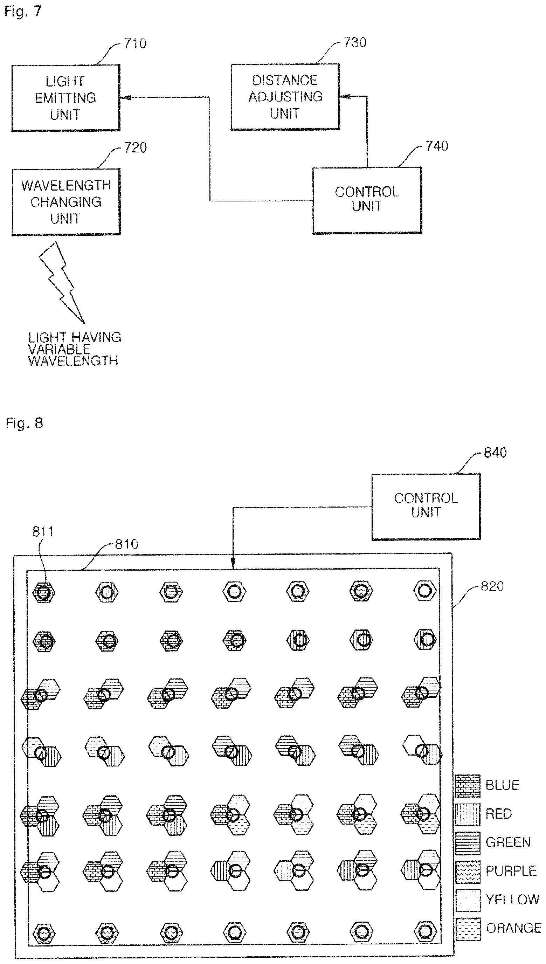

Fig. 7 is a diagram illustrating a light emitting device for growing plants having variable wavelengths using quantum dots according to another embodiment of the present invention.

As illustrated in Fig. 7, the plant growth light emitting device for providing variable wavelengths using quantum dots comprises a light emitting unit 710, a wavelength changing unit 720, and a control unit 740.

The light emitting unit 710 may comprise at least one light source, and a plurality of light sources may be arranged in the form of a matrix.

The wavelength changing unit 720 is spaced apart from the light emitting unit 710 by a predetermined distance and includes quantum dots that emit light corresponding to a predetermined wavelength in each of a plurality of separated regions, which in turn correspond to each of, each column of, or each row of light sources.

The control unit 740 controls the operation of the light emitting unit 710 to adjust the wavelengths outputted from the plant growth light emitting device for providing variable wavelengths using quantum dots.

Specifically, the control unit 740 controls the on/off state or the activation time (turn-on time) of each light source of the light emitting unit 710 according to the growth phase, in consideration of information regarding the different wavelengths and mixed proportions of wavelengths needed for different growth phases of the plants and information regarding the outputted wavelengths obtained for different positions of the light emitting unit 710, thereby controlling the wavelength outputted from the light emitting device. It is also possible to control the intensity of the corresponding wavelength by adjusting the light intensity of each light source. The on/off state of the light source may be adjusted by a pulse width modulation (PWM) signal for controlling the light source, and the light intensity of the light source may be controlled by, for example, a dimmer which is a light adjustment device.

That is, the plant growth light emitting device for providing variable wavelengths using quantum dots outputs light with the wavelength varied by combining multiple wavelengths.

The plant growth light emitting device for providing variable wavelengths further comprises a distance adjusting unit 750. The distance adjusting unit 750 adjusts the distance between the light emitting unit 710 and the wavelength changing unit 720 according to the control of the control unit 740.

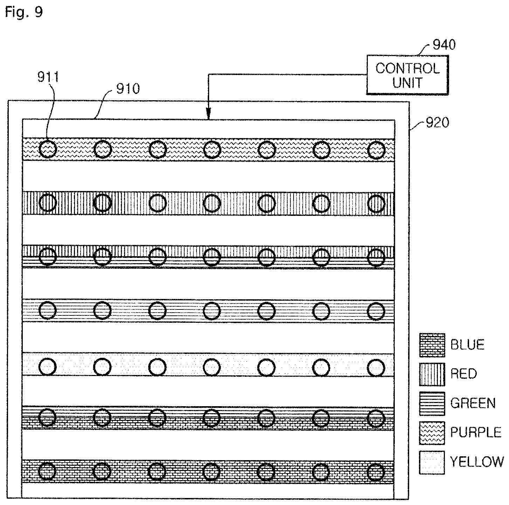

Below, embodiments of a plant growth light emitting device for providing variable wavelengths using quantum dots according to another embodiment of the present invention will be described with reference to Figs. 8 and 9.

Fig. 8 is a diagram illustrating a first embodiment of a light emitting device for growing plants having a variable wavelength using quantum dots according to another embodiment of the present invention.

As illustrated in Fig. 8, the first example implementation of the plant growth light emitting device for providing variable wavelengths using quantum dots comprises a light emitting unit 810, a wavelength changing unit 820 and a control unit 840.

The light emitting unit 810 comprises at least one light source 811, and, for example, a plurality of light sources are arranged in the form of a 7x7 matrix.

The wavelength changing unit 820 is spaced apart from the light emitting unit 810 by a predetermined distance and is illustrated as including at least one or more hexagonal regions corresponding to the light sources 811, respectively, with each hexagonal region including quantum dots for emitting light corresponding to a predetermined wavelength. The quantum dot region may have another shape such as a triangle, a square, and a circle as well as the hexagon.

Specifically, each light source 811 may correspond to a region that includes quantum dots for emitting colors having different wavelengths and may also correspond to a region in which at least two or more types of quantum dots for emitting different colors are combined together.

The wavelength changing unit 820 may further comprise an optical film (not illustrated) for protecting the plurality of separated regions and a color filter (not illustrated) for increasing the color purity of the light passing through the plurality of separated regions.

The control unit 840 controls the operation of each of the light sources 811 to adjust the wavelength outputted from the plant growth light emitting device for providing variable wavelengths using quantum dots.

Specifically, the control unit 840 controls the on/off state or the activation time (turn-on time) of each light source of the light emitting unit 810 according to the growth phase, in consideration of information regarding the different wavelengths and mixed proportions of wavelengths needed for different growth phases of the plants and information regarding the outputted wavelengths obtained for different positions of the light emitting unit 810, thereby controlling the wavelength outputted from the light emitting device. It is also possible to control the intensity of the corresponding wavelength by adjusting the light intensity of each light source.

Fig. 9 is a diagram illustrating a second embodiment of a light emitting device for growing plants having a variable wavelength using quantum dots according to another embodiment of the present invention.

As illustrated in Fig. 9, the second example implementation of the plant growth light emitting device for providing variable wavelengths using quantum dots comprises a light emitting unit 910, a wavelength changing unit 920 and a control unit 940.

The light emitting unit 910 comprises at least one light source 911, and, for example, a plurality of light sources are arranged in the form of a 7x7 matrix.

The wavelength changing unit 920 is spaced apart from the light emitting unit 910 by a predetermined distance and is illustrated as including at least one or more linearly shaped regions each corresponding to a row of light sources 911, where each linearly shaped region includes quantum dots for emitting light corresponding to a predetermined wavelength.

Specifically, the rows of light sources 911 may correspond, respectively, to regions including quantum dots for emitting colors of different wavelengths or to regions in which at least two or more types of quantum dots emitting different colors are combined.

The wavelength changing unit 920 may further comprise an optical film (not illustrated) for protecting the plurality of separated regions and a color filter (not illustrated) for increasing the color purity of light passing through the plurality of separated regions.

The control unit 940 controls the operation of each row of or each of the light sources 911 to adjust the wavelength outputted from the plant growth light emitting device for providing variable wavelengths using quantum dots.

Specifically, the control unit 940 controls the on/off state or the activation time (turn-on time) of each light source of the light emitting unit 810 according to the growth phase, in consideration of information regarding the different wavelengths and mixed proportions of wavelengths needed for different growth phases of the plants and information regarding the outputted wavelengths obtained for different positions of the light emitting unit 910, thereby controlling the wavelength outputted from the light emitting device. It is also possible to control the intensity of the corresponding wavelength by adjusting the light intensity of each light source.

While Fig. 9 illustrates a setup in which the wavelength is changed by controlling the operation of each row of light sources 911 or each of the light sources 911, it is also possible to control the operation of each column of light sources 911.

The present invention is not limited to the above-described embodiments, and it is to be appreciated not only that the present invention allows for a broad scope of application but also that the present invention may be embodied in numerous variations without departing from the scope of the invention as defined in the appended claims.

## Claims

1. A light emitting device for growing plants, the device emitting light having variable wavelengths by combining a plurality of wavelengths using quantum dots and comprising:
a light emitting unit (310) comprising at least one light source;
a wavelength changing unit (320) spaced apart from the light source by a predetermined distance and comprising a plurality of regions, each of the plurality of regions corresponding to each of, each column of, or each row of the at least one light source;
a driving unit (330) configured to change a region of the wavelength changing unit (320) illuminated by the light source; and
a control unit (340) for controlling the driving unit (330) to adjust a wavelength of output light,
wherein the plurality of regions of the wavelength changing unit (320) are separated either in rows or in columns, wherein, in order to change the region of the wavelength changing unit (320) illuminated by the light source, the driving unit (330) is configured to move the at least one light source or the wavelength changing unit (320) either in a row direction or in a column direction,
**characterised in that**
each region of the wavelength changing unit (310) has quantum dots corresponding to a predetermined wavelength, and
the wavelength changing unit (320) comprises a fifth region and at least one of a first region, a second region, a third region, a fourth region, and a sixth region,
the first region having quantum dots for outputting red light,
the second region having quantum dots for outputting green light,
the third region having quantum dots for outputting blue light,
the fourth region having at least two of the quantum dots for outputting red light, quantum dots for outputting green light, and quantum dots for outputting blue light,
the fifth region having a layered structure of at least two of the first to fourth regions, and
the sixth region allowing light emitted by the light emitting unit to output without changing a wavelength of the light.

2. The device of claim 1, further comprising a distance adjusting unit (350) configured to adjust a distance between the light source and the wavelength changing unit (320).

3. The device of claim 2, wherein the distance adjusting unit (350) is formed as an integrated body with the driving unit (330).

4. The device of claim 1, wherein, in the fifth region, a region having quantum dots corresponding to a longer wavelength is positioned further from the light emitting unit (310).

5. A light emitting device for growing plants, the device emitting light having variable wavelengths by combining a plurality of wavelengths using quantum dots and comprising:
a light emitting unit (710) comprising at least one light source;
a wavelength changing unit (720) spaced apart from the light source by a predetermined distance and comprising a region having quantum dots corresponding to a predetermined wavelength, the region corresponding to each of, each column of, or each row of the at least one light source; and
a control unit (740) for controlling the light emitting unit (710) to adjust a wavelength of light outputted through the wavelength changing unit (720), wherein the control unit (740) is configured to control an on-off operation, a turning-on time or an intensity of each of the at least one light source to adjust the wavelength of light output through the wavelength changing unit,
**characterised in that**
the wavelength changing unit (720) comprises a plurality of regions comprising a fifth region and at least one of a first region, a second region, a third region, a fourth region, and a sixth region,
the first region having quantum dots for outputting red light,
the second region having quantum dots for outputting green light,
the third region having quantum dots for outputting blue light,
the fourth region having at least two of the quantum dots for outputting red light, quantum dots for outputting green light, and quantum dots for outputting blue light,
the fifth region having a layered structure of at least two of the first to fourth regions, and
the sixth region allowing light emitted by the light emitting unit to output without changing a wavelength of the light.

6. The device of claim 5, further comprising a distance adjusting unit (750) configured to adjust a distance between the light source and the wavelength changing unit /720).

7. The device of claim 5, wherein, in the fifth region, a region having quantum dots corresponding to a longer wavelength is positioned further from the light emitting unit (710).

## Patentansprüche

1. Eine Beleuchtungsvorrichtung zur Pflanzenbehandlung, **dadurch gekennzeichnet, dass** die Beleuchtungsvorrichtung verschiedene Wellenlängen hat, indem eine Vielzahl von Wellenlengen durch Quantenpunkte kombiniert werden, bestehend aus:
eine Beleuchtungsvorrichtung (310), bestehend aus mindestens einer Lichtquelle;
eine Wellenlängenumstellungsvorrichtung (320), welche einen vorherbestimmten Abstand zur Lichtquelle einhält und mehrere Bereiche beinhaltet, wobei jeder dieser Mehrzahl von Bereichen jeweils der Reihe oder Spalte der mindestens einen Lichtquelle korrespondiert;
eine Antriebseinheit (330), die konfiguriert ist, um den Bereich der Wellenlängenumstellungsvorrichtung zu konfigurieren (320), der von der Lichtquelle beleuchtet wird; und
eine Kontrollvorrichtung (340), um die Antriebseinheit zu kontrollieren (330), um die Wellenlänge des ausgehenden Lichtes anzupassen,
wobei die Mehrzahl der Bereiche der Wellenlängenumstellungsvorrichtung (320) entweder in Zeilen oder Spalten aufgeteilt ist, wobei, um die von der Lichtquelle beleuchteten Bereiche der Wellenlängenumstellungsvorrichtung (320) zu verändern, die Antriebseinheit (330) so konfiguriert ist, dass sie die mindestens eine Lichtquelle oder die Wellenlängenumstellungsvorrichtung (320) bewegen kann, entweder in Bezug auf die Zeile oder Spalte,
**dadurch gekennzeichnet,**
**dass** jeder Bereich der Wellenlängenumstellungsvorrichtung (310) Quantenpunkte hat, die mit einer vorbestimmten Wellenlänge korrespondieren, und die Wellenlängenumstellungsvorrichtung (320) einen fünften Bereich enthält und mindestens eine des ersten Bereiches, einen des zweiten Bereiches, einen des dritten Bereiches, einen des vierten Bereiches und einen des sechsten Bereiches,
wobei der erste Bereich Quantenpunkte hat, um rotes Licht abzugeben,
wobei der zweite Bereich Quantenpunkte hat, um grünes Licht abzugeben,
wobei der dritte Bereich Quantenpunkte hat, um blaues Licht abzugeben,
wobei der vierte Bereich mindestens zwei Quantenpunkte hat, um rotes Licht abzugeben, Quantenpunkte, um grünes Licht abzugeben, und Quantenpunkte, um blaues Licht abzugeben, hat Licht
wobei der fünfte Bereich eine geschichtete Struktur von mindestens zwei der ersten bis vierten Bereiche hat, und
wobei der sechste Bereich Licht der Beleuchtungsvorrichtung zulässt, ohne die Wellenlänge des Lichts zu ändern.

2. Die Vorrichtung von Anspruch 1, die zudem eine Entfernungsanpassungsvorrichtung beinhaltet (350), welche konfiguriert ist, um die Entfernung zwischen der Lichtquelle und der Wellenlängenumstellungsvorrichtung anzupassen (320).

3. Die Vorrichtung von Anspruch 2, wobei die Entfernungsanpassungsvorrichtung (350) einen integrierten Teil der Antriebseinheit darstellt (330).

4. Die Vorrichtung von Anspruch 1, **gekennzeichnet durch** einen Bereich im fünften Bereich mit Quantenpunkten, die einer längeren Wellenlänge entsprechen, welcher weiter von der Beleuchtungsvorrichtung entfernt positioniert ist (310).

5. Eine Beleuchtungsvorrichtung zur Pflanzenbehandlung, **dadurch gekennzeichnet, dass** die Beleuchtungsvorrichtung verschiedene Wellenlängen hat, indem eine Vielzahl von Wellenlengen durch Quantenpunkte kombiniert werden, bestehend aus:
eine Beleuchtungsvorrichtung (710), bestehend aus mindestens einer Lichtquelle;
eine Wellenlängenumstellungsvorrichtung (720), welche einen vorherbestimmten Abstand zur Lichtquelle einhält und einen Bereich mit Quantenpunkten beinhaltet, wobei dieser Bereich jeweils einer Reihe oder Spalte von mindestens einer Lichtquelle korrespondiert; und
eine Kontrollvorrichtung (740), um die Beleuchtungsvorrichtung zu kontrollieren (710), um die Wellenlänge des Lichts anzupassen, die von der Wellenlängenumstellungsvorrichtung abgegeben wird (720), wobei die Kontrollvorrichtung (740) konfiguriert ist, um die An- und Ausschaltung, eine Anschaltungszeit oder die Intensität der mindestens einen Lichtquelle zu kontrollieren, um die Wellenlänge des Lichts, das von der Wellenlängenumstellungsvorrichtung abgegeben wird,
anzupassen **dadurch gekennzeichnet,**
**dass** die Wellenlängenumstellungsvorrichtung (720) eine Vielzahl von Bereichen umfasst, die einen fünften Bereich enthält und mindestens einen des ersten Bereiches, einen des zweiten Bereiches, einen des dritten Bereiches, einen des vierten Bereiches, und einen des sechsten Bereiches,
wobei der erste Bereich Quantenpunkte hat, um rotes Licht anzugeben,
wobei der zweite Bereich Quantenpunkte hat, um grünes Licht abzugeben,
wobei der dritte Bereich Quantenpunkte hat, um blaues Licht abzugeben,
wobei der vierte Bereich mindestens zwei Quantenpunkte hat, um rotes Licht abzugeben, Quantenpunkte, um grünes Licht abzugeben, und Quantenpunkte, um blaues Licht abzugeben hat
wobei der fünfte Bereich eine geschichtete Struktur von mindestens zwei der ersten bis vierten Bereiche hat, und
wobei der sechste Bereich Licht der Beleuchtungsvorrichtung zulässt, ohne die Wellenlänge des Lichts zu ändern.

6. Die Vorrichtung von Anspruch 5, die zudem eine Entfernungsanpassungsvorrichtung beinhaltet (750), welche konfiguriert ist, um die Entfernung zwischen der Lichtquelle und der Wellenlängenumstellungsvorrichtung anzupassen (720).

7. Die Vorrichtung von Anspruch 5, **gekennzeichnet durch** einen Bereich im fünften Bereich mit Quantenpunkten, die einer längeren Wellenlänge entsprechen, welcher weiter von der Beleuchtungsvorrichtung entfernt positioniert ist (710).

## Revendications

1. Un dispositif émetteur de lumière pour la culture de plantes, le dispositif émettant de la lumière ayant des longueurs d'onde variables en combinant une pluralité de longueurs d'onde en utilisant des points quantiques et comprenant:
une unité d'émission de lumière (310) comprenant au moins une source de lumière;
une unité de changement de longueur d'onde (320) espacée de la source de lumière d'une distance prédéterminée et comprenant une pluralité de régions, chacune de la pluralité de régions correspondant à chacune, chaque colonne, ou chaque rangée de l'au moins une source de lumière;
une unité de commande (330) configurée pour changer une région de l'unité de changement de longueur d'onde (320) éclairée par la source de lumière; et
une unité de commande (340) pour commander l'unité d'entraînement (330) pour régler une longueur d'onde de la lumière de sortie,
dans lequel la pluralité de régions de l'unité de changement de longueur d'onde (320) sont séparées disposé soit en rangées soit en colonnes, dans lequel, afin de changer la région de l'unité de changement de longueur d'onde (320) éclairée par la source de lumière, l'unité de commande (330) est configurée pour déplacer au moins une source de lumière ou le changement de longueur d'onde unité (320) soit dans le sens des lignes, soit dans le sens des colonnes,
**caractérisé en ce que**
**caractérisé en ce que** chaque région de l'unité de changement de longueur d'onde (310) a des points quantiques correspondant à une longueur d'onde prédéterminée, et
l'unité de changement de longueur d'onde (320) comprend une cinquième région et au moins une parmi une première région, une deuxième région, une troisième région, une quatrième région et une sixième région,
la première région ayant des points quantiques pour émettre de la lumière rouge,
la deuxième région ayant des points quantiques pour la sortie de lumière verte,
la troisième région ayant des points quantiques pour la sortie de la lumière bleue,
la quatrième région ayant au moins deux des points quantiques pour la sortie de la lumière rouge, des points quantiques pour la sortie de la lumière verte et des points quantiques pour la sortie bleu lumière,
la cinquième région ayant une structure en couches d'au moins deux des première à quatrième régions, et
la sixième région permettant à la lumière émise par l'unité émettrice de lumière de sortir sans changer une longueur d'onde de la lumière.

2. Le dispositif selon la revendication 1, comprenant en outre une unité de réglage de distance (350) configurée pour régler une distance entre la source de lumière et l'unité de changement de longueur d'onde (320).

3. Le dispositif selon la revendication 2, dans lequel l'unité de réglage de distance (350) est formée en tant que corps intégré à l'unité d'entraînement (330).

4. Le dispositif selon la revendication 1, dans lequel, dans la cinquième région,une région ayant des points quantiques correspondant à une longueur d'onde plus longue est positionnée plus loin du unité émettrice de lumière (310).

5. Un dispositif émetteur de lumière pour la culture de plantes, le dispositif émettant de la lumière ayant des longueurs d'onde variables en combinant une pluralité de longueurs d'onde en utilisant des points quantiques et comprenant:
une unité d'émission de lumière (710) comprenant au moins une source de lumière;
une unité de changement de longueur d'onde (720) espacée de la source de lumière d'une distance prédéterminée et comprenant une région ayant des points quantiques correspondant à une longueur d'onde prédéterminée, la région correspondant à chacune de, chaque colonne de, ou chaque rangée d'au moins une source lumineuse; et
une unité de commande (740) pour commander l'unité d'émission de lumière (710) pour régler unlongueur d'onde de la lumière émise à travers l'unité de changement de longueur d'onde (720), dans laquelle l'unité de commande (740) est configurée pour commander une opération marche-arrêt, un temps d'allumage ou une intensité de chacune de la au moins une source lumineuse pour ajuster la longueur d'onde de la lumière émise à travers l'unité de changement de longueur d'onde,
**caractérisé en ce que**
l'unité de changement de longueur d'onde (720) comprend une pluralité de régions comprenant une cinquième région et au moins une parmi une première région, une deuxième région, une troisième région, une quatrième région et une sixième région,
la première région ayant des points quantiques pour émettre de la lumière rouge,
la deuxième région ayant des points quantiques pour émettre une lumière verte,
la troisième région ayant des points quantiques pour la sortie de lumière bleue,
la quatrième région ayant au moins deux des points quantiques pour la sortie de la lumière rouge, des points quantiques pour la sortie de la lumière verte et des points quantiques pour la sortie de la lumière bleue,
la cinquième région ayant une structure en couches d'au moins deux des première à quatrième régions, et
la sixième région permettant à la lumière émise par l'unité émettrice de lumière de sortir sans changer une longueur d'onde de la lumière.

6. Le dispositif selon la revendication 5, comprenant en outre une unité de réglage de distance (750) configurée pour régler une distance entre la source lumineuse et l'unité de changement de longueur d'onde (720).

7. Le dispositif selon la revendication 5, dans lequel, dans la cinquième région, une région ayant des points quantiques correspondant à une longueur d'onde plus longue sont positionnés plus loin de l'unité d'émission de lumière (710).
